Europäisches Patentamt

European Patent Office

Office européen des brevets

(11) Veröffentlichungsnummer: **0 281 840 B1**

# EUROPÄISCHE PATENTSCHRIFT

(45) Veröffentlichungstag der Patentschrift: 18.12.91

(51) Int. Cl.⁵: **B29C 45/38**

(21) Anmeldenummer: 88102674.4

(22) Anmeldetag: 24.02.88

(54) **Spritzgusswerkzeug zur Herstellung eines Kunststoffteiles mit definierter Fläche im Angussbereich.**

(30) Priorität: 07.03.87 DE 3707362

(43) Veröffentlichungstag der Anmeldung:
14.09.88 Patentblatt 88/37

(45) Bekanntmachung des Hinweises auf die
Patenterteilung:
18.12.91 Patentblatt 91/51

(84) Benannte Vertragsstaaten:
DE FR GB IT

(56) Entgegenhaltungen:
DE-B- 1 073 157
FR-A- 840 164
FR-A- 994 417

PATENT ABSTRACTS OF JAPAN, Band 7, Nr.
187 (M-236)[1332], 16. August 1983; & JP-A-58
89 337 (YOSHIDA KOGYO K.K.) 27-05-1983

PATENT ABSTRACTS OF JAPAN, Band 7, Nr.
187 (M-236)[1332], 16. August 1983; & JP-A-58
89 338 (YOSHIDA KOGYO K.K.) 27-05-1983

PATENT ABSTRACTS OF JAPAN, Band 10,
Nr. 191 (M-495)[2247], 4. Juli 1986; & JP-A-61
35 923 (DAINICHI KANAGATA SEISAKUSHO

K.K.) 20-02-1986

(73) Patentinhaber: BAYER AG

W-5090 Leverkusen 1 Bayerwerk(DE)

(72) Erfinder: Jülicher, Karl-Heinz
Scharffensteinstrasse 97
W-5000 Köln 80(DE)

## Beschreibung

Die Erfindung betrifft ein Spritzgußwerkzeug zur Herstellung eines Kunststoffteiles, insbesondere Probestabes, mit definierter Fläche im Angußbereich und ein entsprechendes Verfahren,

Bisher wurden Probestäbe für mechanische Prüfungen in einem Werkzeug gespritzt und mit den Angußkanälen ausgeworfen. In einem weiteren Arbeitsgang mußten dann durch Sägen oder Stanzen die Angußkanäle entfernt werden, Neben dem zusätzlichen Arbeitsaufwand trat als besonderer Nachteil hervor, daß mangelnde Genauigkeit und Gratbildung bei magazinierten Prüfmaschinen immer wieder zu Störungen führten, Aus PATENT ABSTRACTS OF JAPAN, Bd. 10, Nr. 191 (M-495) [2247] ist ein Formwerkzeug bekannt, bei dem ein Teil des Angußkanales auf einem relativ zum Formnest beweglichen Schieber angebracht ist, Mit Hilfe dieses Schiebers wird nach dem Guß der Angußkanal glatt vom Formteil abgeschert'

Aufgabe der Erfindung ist es, ein Verfahren zu finden, mit bzw, nach dem ein Spritzgußteil - insbesondere ein Probestab - fix und fertig hergestellt werden kann, wobei im Bereich des Anguftkanals eine glatte, maßlich korrekte Grenzfläche entsteht, welches gleichzeitig ein einfaches Entformen des gesamten Angußkanales zuläßt.

Die Aufgabe wird nach dem erfindungsgemäßen Verfahren dadurch gelöst, daß während des Nachdruckes im Zeitabschnitt vom 0,3 bis 0,95fachen, insbesondere vom 0,4 bis 0,7fachen, der gesamten Nachdruckzeit der Angußkanal entlang der Grenzfläche zum Formnest abgeschnitten und durch eine Verschlußwand unter Glättung der Scherfläche des Kunststoffteiles verschlossen wird.

Durch den hohen Nachdruck (60 bar) ist es möglich, auch Probestäbe in Richtung der Längskante über 8 bis 25 mm so abzuscheren, daß die geringe Störung der Struktur durch den nachfolgenden Glättungsvorgang weitgehend wieder aufgehoben wird. Dabei sorgt eine schräg gestellte Schneide für die saubere Trennung im letzten Abschnitt.

Weiter sollte der Kunststoff beim Verschieben vorteilhafterweise eine Temperatur haben, die etwa 20 %, insbesondere 10 %, unter der Glaspunkttemperatur liegt, um nach dem Aschervorgang ein Anbacken der beiden Angußstücke - nämlich dem Angußteil aus dem Kanal im Schieber und dem Angußteil im Werkzeug - zu erreichen, damit das gesamte Angußstück mit einem Mal ausgeworfen werden kann.

Durch das erfindungsgemäße Verfahren ist es möglich, Formnest und Angußkanal während des Nachdruckes beim Spritzguß entang ihrer Grenzfläche relativ zueinander so zu verschieben, daß beispielsweise in der Länge gleiche Probestäbe mit riefenfreier Oberfläche und gratfreien, rechteckigen sowie rechtwinkligen Kanten in einem Arbeitsgang entstehen, die ohne Nacharbeit in Magazine von automatisch arbeitenden Prüfmaschinen eingesetzt werden können. Überraschend ist dabei, daß keine Verwerfungen trotz Verwendung einfacher Schneiden eintreten, die in irgendeiner Form das Ergebnis bei den mechanischen Prüfungen beeinflussen. Weiter ist es vorteilhaft, daß keine besonderen Anforderungen an die Schneide gestellt werden, so daß das Werkzeug keine besonderen Ansprüche an die Instandhaltung stellt, wodurch eine lange Standzeit erzielt wird. Die Konstruktion ist sehr einfach. Das letzte Stück des Angußkanals vor dem Formnest wird auf einem Schieber untergebracht. Eine Kante des Angußkanals, die beim Verschließen an der Zuflußöffnung vorbeistreicht, ist als Schneide ausgebildet. Die hieran anschließende glatte Wand des Schiebers dient dann als Verschlußteil. Die eigentlichen Gleitflächen sind in bekannter Weise ausgebildet.

Die Erfindung wird anhand der Zeichnungen nachstehend erläutert. Es zeigen

    Fig. 1     Aufsicht auf untere Werkzeughälfte
    Fig. 2     Querschnitt im Bereich des Schiebers
    Fig. 3     Längsschnitt im Bereich des Schiebers.

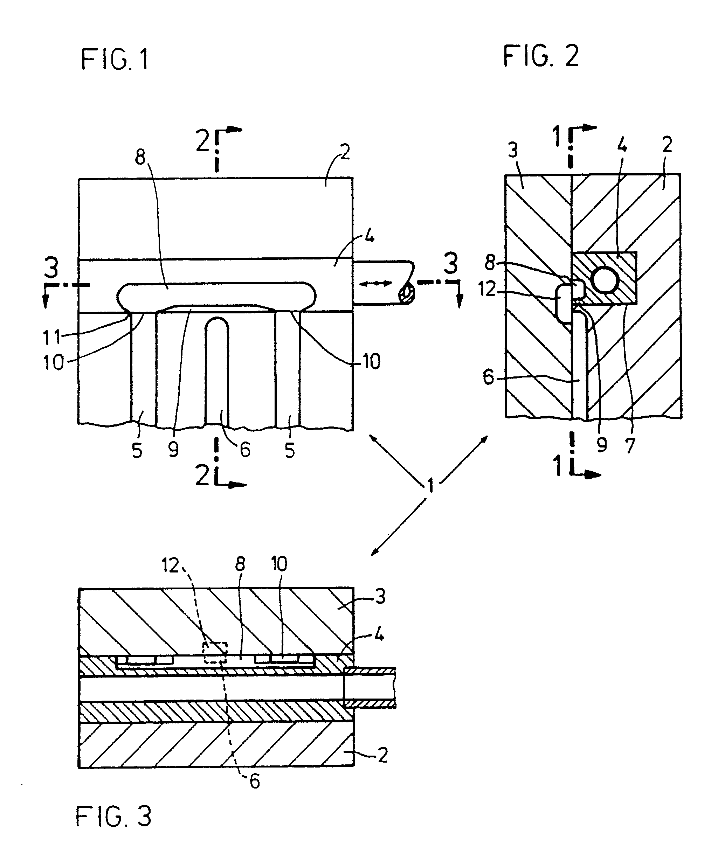

In Fig. 1 bis 3 ist ein Spritzgießwerkzeug zur Herstellung von zwei Probestäben 1 dargestellt, welches aus einem unteren Werkzeugteil 2, einem oberen Werkzeugteil 3 und einem Schieber 4 besteht.

Das untere Werkzeugteil 2 enthält zwei Formnester 5 für Probestäbe 1 und mittig im Werkzeugteil 2 einen feststehenden Angußkanal 6 zur Zuführung des plastifizierten Kunststoffes. Am Ende der Formnester 5 ist quer eine Nut 7 angeordnet, in der der Schieber 4 in Richtung der Längsachse verschiebbar angeordnet ist und der nach oben durch das obere Werkzeugteil 3 gehalten wird. In Höhe der Formnester 5 ist in Längsrichtung ein Angußkanal 8 mit Verschlußwand 9 im Schieber 4 angeordnet, der zwei seitlich zu den Formnestern angepaßte Ausgänge 10 besitzt, die ein oder beidseitig quer zur Verschieberichtung Schneiden 11 besitzen. Das obere Werkzeugteil 3 enthält ferner einen Überlauf 12 der eine Verbindung zwischen zwei Angußkanälen 6, 8 herstellt.

Beim Spritzen fließt der Kunststoff über Angußkanal 6, Überlauf 12 und Angußkanal 8 durch Ausgang 10 in die Formnester 5. Noch während des Nachdruckes wird der Schieber 4 verschoben und die Formnester 5 geschlossen, wobei die Grenzfläche 13 sauber abgeschert und geglättet wird. Der im Überlauf 12 verbliebene Kunststoff backt infolge der hohen Temperatur nach dem Verschieben am Angußteil im Schieber 4 an. Nach weiterem Erstarren werden Probestäbe 1 und Angußstück 14 ausgeworfen.

## Patentansprüche

1.  Verfahren zur Herstellung eines Kunststoffteiles mit definierter Fläche im Angußbereich mittels eines Spritzgußwerkzeuges, das einen auf einen Schieber (4) angeordneten Angußkanal (8) aufweist, dadurch gekennzeichnet, daß während des Nachdruckes im Zeitabschnitt vom 0,3 bis 0,95fachen der gesamten Nachdruckzeit der Angußkanal (8) entlang der Grenzfläche (10) zum Formnest (5) abgeschnitten und durch eine Verschlußwand (9) unter Glättung der Scherfläche des Kunststoffteiles verschlossen wird und nach dem Abschervorgang die Füllung des Angußkanales (8) an einem Überlauf (12) festgebacken und das gesamte Angußstück, bestehend aus der Füllung des Angußkanales (8) und dem Angußteil im Werkzeug (12, 6), ausgeworfen wird.

## Claims

1.  Process for manufacturing a plastic part having a defined surface area in the sprue region by means of an injection moulding tool which has a runner (8) disposed on a slide (4), characterised in that, during the dwell pressure, in the period of time from 0.3 to 0.95 of the total dwell pressure time the runner (8) is cut off along the interface (10) with the moulding cavity (5) and is closed by a closure wall (9) with simultaneous smoothing of the shearing surface of the plastic part and, after the shearing-off process, the filling of the runner (8) is caked on an overflow (12) and the entire sprue piece, comprising the filling of the runner (8) and the sprue part in the tool (12, 6) is ejected.

## Revendications

1.  Procédé de fabrication d'une pièce de matière plastique ayant une surface définie à l'emplacement de la carotte, au moyen d'un moule à injection qui comporte un canal de carotte (8) disposé sur une coulisse (4), caractérisé en ce que le canal de carotte (8) est coupé le long de l'interface (10) avec l'empreinte de moulage (5) pendant le maintien en pression, au cours de la période de 0,3 à 0,95 fois le temps total de maintien en pression, et il est obturé par une cloison de fermeture (9) avec lissage de la surface cisaillée de la pièce de matière plastique et, à la fin du processus de cisaillement, la matière qui remplit le canal de carotte (8) se fixe en se collant à un trop-plein (12) et l'ensemble de l'élément formant la carotte et se composant de la matière qui remplit le canal de carotte (8) et de la partie de la carotte qui se trouve dans le moule (12, 6) est éjecté.

FIG. 1

FIG. 2

FIG. 3